# EUROPEAN PATENT APPLICATION

(11) **EP 4 631 819 A1**
(43) Date of publication of application: **15.10.2025**
(21) Application number: 24305590.2
(22) Date of filing: 11.04.2024
(51) Int. Cl.: B61C 3/00, B61C 17/00

(54) **RAILWAY VEHICLE**

(71) Applicant: ALSTOM Holdings, 93400 Saint-Ouen-sur-Seine (FR)
(72) Inventor: TACHET, Valentin, 65310 Horgues (FR); AUDEMAR, Christophe, 65310 Horgues (FR)
(74) Representative: Plasseraud IP

(57) **Abstract**

A railway vehicle (1), comprises a traction motor (9), a hydrogen tank (10), a roof box (11) forming a housing, a replaceable power unit (17), separate from the traction motor and the hydrogen tank, the replaceable power unit comprising a support, a compressor and a fuel cell. The replaceable power unit has a mounted configuration, in which the replaceable power unit is received and secured into the housing, the fuel cell being fluidly connected to the hydrogen tank, fluidly connected to the compressor and electrically connected to the traction motor, and an extracted configuration, in which the replaceable power unit is separated from the housing with the compressor and the fuel cell still secured to the support, the compressor still fluidly connected to the fuel cell and the fuel cell fluidly separated from the hydrogen tank and electrically separated from the traction motor.

## Description

The present invention concerns a railway vehicle.

It is known railway vehicles electrically powered by a power unit using one or several fuel cells. The fuel cell degrades as it is used and has to be replaced often.

During the conception of the railway vehicle, the need to replace the power unit is a technological constraint. It is known by US10899369B2 to design a removable drawer under a railway vehicle comprising a power unit, in order to facilitate the replacement of the power unit. Indeed, when replacing the power unit, the drawer comprising the damaged power unit is removed from the railway vehicle and another drawer comprising an operational power unit is inserted in the railway vehicle.

Nevertheless, the position of the drawer under the railway vehicle may require the use of a forklift to replace the power unit. The position of the drawer under the railway vehicle limits the height of the drawer and hence the height of the components of the power unit. Moreover, the position of the drawer under the railway vehicle is likely to cause safety issues, by being more accessible to unauthorized people. The power unit under the railway vehicle is also likely to be impacted and degraded by natural hazards such as projections of stones during the travelling of the railway vehicle or water splashes when the tracks are covered in puddles. Finally, the air supply of the power unit needed to produce electrical energy is limited under the railway vehicle because the exchange surface between the power unit and the air at the exterior of the railway vehicle is relatively small, and the air flow under the railway vehicle can be turbulent at high speed.

The invention aims at proposing a railway vehicle with a safer and more easily replaceable power unit, with improved air supply.

To this end, aspects of the invention pertains to a railway vehicle, comprising:
- a traction motor, configured to propel the railway vehicle when the traction motor is electrically powered,
- a hydrogen tank,
- a housing,
- a replaceable power unit, separate from the traction motor and the hydrogen tank, the replaceable power unit comprising a support, a compressor and a fuel cell both secured to the support, the replaceable power unit having:
   - a mounted configuration, in which the replaceable power unit is received and secured into the housing, the fuel cell being fluidly connected to the hydrogen tank, fluidly connected to the compressor and electrically connected to the traction motor, so that the fuel cell electrically powers the traction motor by electrochemical reaction between an exterior air, supplied by the compressor, and the hydrogen, provided by the hydrogen tank; and
   - an extracted configuration, in which the replaceable power unit is separated from the housing with the compressor and the fuel cell still secured to the support, the compressor still fluidly connected to the fuel cell and the fuel cell fluidly separated from the hydrogen tank and electrically separated from the traction motor;
the railway vehicle comprising a roof box forming the housing.

Thanks to the invention, in particular thanks to the roof box, the safety of the replaceable power unit is improved. Indeed, the roof of the railway vehicle is less accessible by an unauthorized people than the under of the railway vehicle. The position of the replaceable power unit improve its removing and its inserting thanks to a bridge crane that the maintenance workshop are usually equipped. Moreover, the replaceable power unit inserted in the roof box is away from the track and has a better protection during the travelling of the railway vehicle. Finally, the air flow on the roof of the railway vehicle is better by being less turbulent than the air flow under the railway vehicle. Moreover, it is advantageously easy to provide an air inlet with a high shape on the roof. Thus, the air supply of the replaceable power unit is improved by the position of the replaceable power unit on the roof.

According to advantageous but optional aspects, the railway vehicle may incorporate one or more of the following features, considered individually or according to any technically admissible combination:
- in the mounted configuration of the replaceable power unit, the compressor is positioned above the fuel cell in a height direction of the railway vehicle.
- the replaceable power unit, comprises a damper) placed between the compressor and the fuel cell.
- an exterior air inlet is positioned laterally on the railway vehicle and opens on an exterior of the railway vehicle, the compressor being configured to suck in the exterior air via the exterior air inlet before supplying said exterior air to the fuel cell for the electrochemical reaction.
- the replaceable power unit comprises a filter which is secured to the support in the mounted configuration and in the extracted configuration of the replaceable power unit, the compressor being configured to suck in the exterior air via the filter before supplying said exterior air to the fuel cell for the electrochemical reaction.
- the support comprises a mechanical interface through which the replaceable power unit is secured to the housing in mounted configuration.
- the railway vehicle comprises a first high voltage interface positioned in the housing, and
- the replaceable power unit comprises a second high voltage interface, which is connected to the fuel cell in the mounted configuration and in the extracted configuration of the replaceable power unit, the second high voltage interface being disconnected from the first high voltage interface in the extracted configuration and being connected to the first high voltage interface in the mounted configuration so that the fuel cell electrically powers the traction motor via the first high voltage interface connected to the second high voltage interface.
- the railway vehicle comprises a first fluidic connector positioned in the housing, the fuel cell comprises a cooling circuit, configured to guide the flowing of a cooling fluid to cool the fuel cell, and the replaceable power unit comprises a second fluidic connector which is:
   - connected to the cooling circuit in the mounted configuration and in the extracted configuration,
   - connected to the first fluidic connector in the mounted configuration to enable an exchange of cooling fluid between the first fluidic connector and the cooling circuit via the second fluidic connector, and
   - disconnected from the first fluidic connector in extracted configuration.
- the hydrogen tank comprises a third fluidic connector positioned in the housing, the replaceable power unit comprises a fourth fluidic connector, which is:
   - connected to the fuel cell in the mounted configuration and in the extracted configuration,
   - connected to the third fluidic connector in the mounted configuration to connect the fuel cell with the hydrogen tank, and
   - disconnected from the third fluidic connector in extracted configuration.

The invention will be better understood, and other advantages thereof will appear more clearly, in light of the following description of a railway vehicle, provided solely as a non-limiting example and in reference to the appended drawings, in which:
- Figure 1 is a view of a railway vehicle
- Figure 2 is a transversal view of a roof box of the vehicle of the figure 1 with a replaceable power unit being in a mounted configuration.
- Figure 3 is transversal view of the replaceable power unit of the figure 2
- Figure 4 is a view of the replaceable power unit in an extracted configuration

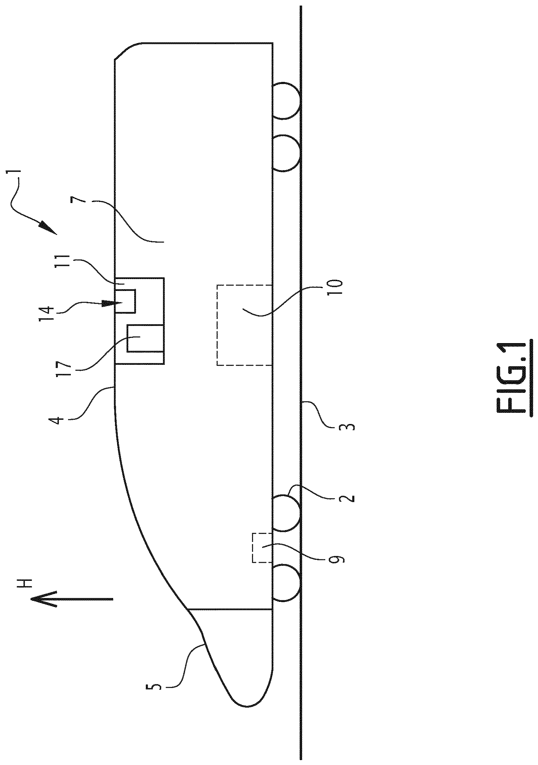

A railway vehicle 1 is represented on figure 1. The vehicle 1 comprises wheels 2, in order to roll on a rail track 3.

The railway vehicle 1 defines a height direction H which extends from the wheels 2 to a roof 4 of the railway vehicle 1. The height direction H is vertical when the railway vehicle 1 travels on a horizontal rail track 3.

The railway vehicle 1, also simply designated as "vehicle 1" within the scope of the present description, comprises a driving cabin 5 and a wagon 7.

The driving cabin 5 is positioned at the front of the vehicle 1. The railway vehicle 1 is drivable by a driver. The driver inside the driving cabin 5 controls the vehicle 1.

The wagon 7 is positioned at rear of the driving cabin 5. More precisely the wagon 7 is attached behind the driving cabin 5. The wagon 7 is configured to carry passengers or products from one place to another. In this example, the vehicle comprises one wagon. In a variant not shown, the vehicle comprises several wagons 7 attached to each other.

The vehicle 1 comprises a low voltage source 8.

The vehicle 1 comprises a traction motor 9, which, when electrically powered, rotates the wheels 2 to propel the vehicle 1.

The vehicle 1 comprises a hydrogen tank 10 filled with pressurized hydrogen.

The vehicle 1 comprises a roof box 11. The roof box 11 is arranged on the roof 4 of the vehicle 1. The roof box 11 defines an interior volume 12. The roof box 11 comprises a housing 13 delimited in the interior volume 12 and an exterior air inlet 14.

The exterior air inlet 14 is positioned laterally on the roof box 11. The exterior air inlet 14 opens to the exterior of the roof box 11, more precisely to the exterior of the vehicle 1. The exterior air inlet 14 allows an exterior air to be sucked in the interior volume 12 from the exterior of the vehicle 1.

The vehicle 1 also comprises a cooling system 15. The cooling system 15 is positioned in the roof box 11 in the interior volume 12. The cooling system 15 comprises components such as fans and heater, not shown, connected to each other and configured to enable thermal exchanges of a cooling fluid flowing in the cooling system 15.

Advantageously, the cooling system 15 comprises a first fluidic connector 16 positioned in the housing 13.

Advantageously, the vehicle 1 comprises a first high voltage interface 18 positioned in the housing 13. The high voltage interface 18 is electrically connected to the traction motor 9.

Advantageously, the hydrogen tank 10 comprises a third fluidic connector 20 positioned in the housing 13.

The low voltage source comprises a first low voltage interface 22 positioned in the housing 13.

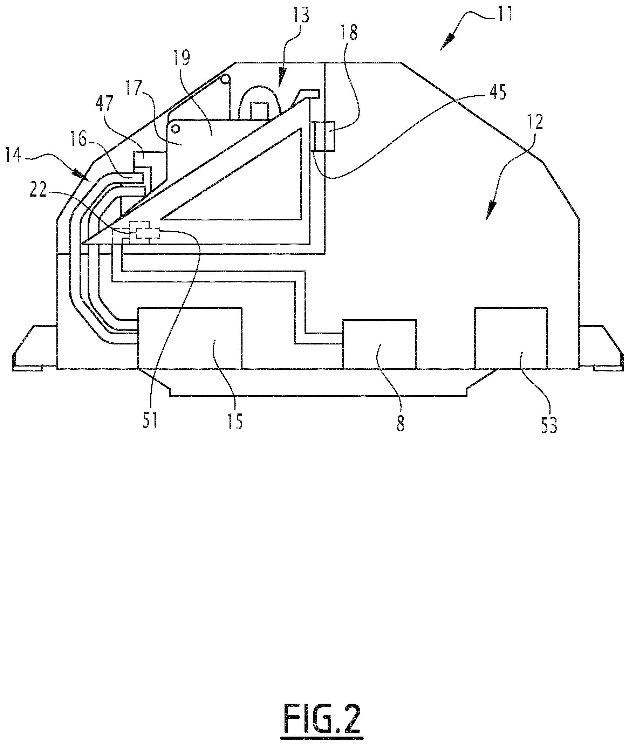

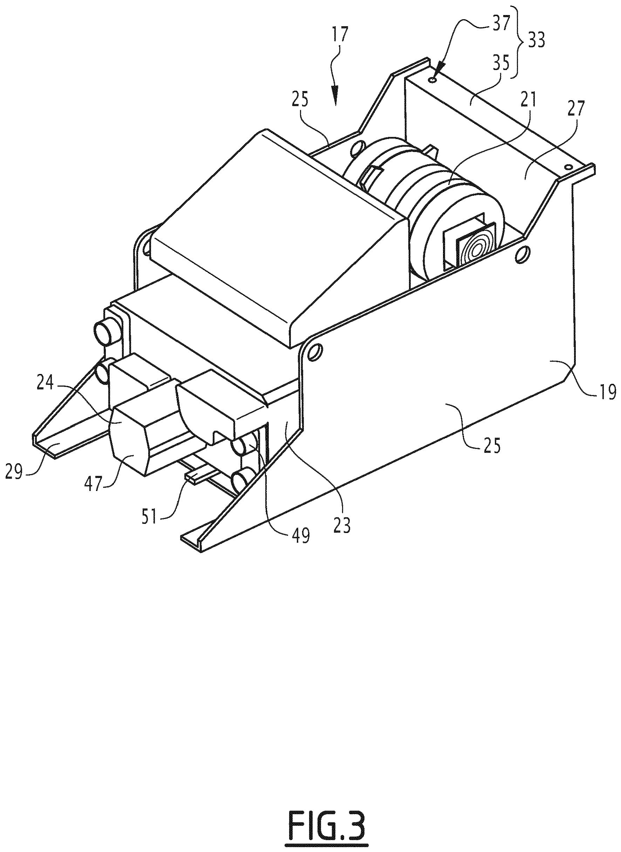

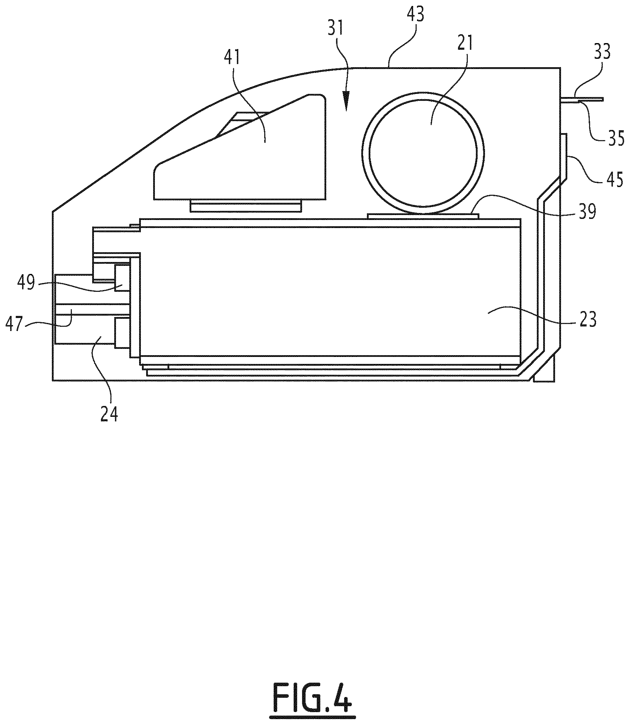

The vehicle 1 comprises a replaceable power unit 17 as shown in Figure 2. The replaceable power unit 17, also simply designated as "power unit 17" within the scope of the present description, comprises a support 19, a compressor 21 and a fuel cell 23, as shown in figures 3 and 4.

The power unit 17 has a mounted configuration in which the power unit 17 is received and secured into the housing 13 and an extracted configuration in which the power unit 17 is extracted from the housing 13 independently from the motor 9 or the hydrogen tank 10.

The support 19 comprises two identical side walls 25, a back wall 27 and a bottom wall 29.

The side walls 25, the back wall 27 and the bottom wall 29 are flat. A normal vector of the side walls 25, a normal vector of the back wall 27 and a normal vector of the bottom wall 29, form a trihedral. When the power unit 17 is in the extracted configuration the bottom wall 29 put on a horizontal flat surface, the side walls 25 are vertical, the back wall 27 is vertical and the bottom wall 29 is horizontal. The bottom wall 29 and the back wall 27 are positioned between the side walls 25. The side walls 25, the back wall 27 and the bottom wall 29 are secured together and define a volume 31.

Advantageously, the support 19 comprises a mechanical interface 33. The mechanical interface 33 comprises an interface wall 35 oriented as the bottom wall 29. The interface wall 35 is connected to the side walls 25 and the back wall 27. The mechanical interface 33 is configured to be secured to the housing 13. The mechanical interface 33 comprises two holes 37 which are formed through the interface wall 35 and which allow a removable securing of the support 19 to the housing 13 with screw.

Advantageously, the support 19 is made from a single part.

The fuel cell 23 comprises electrochemical cells, not shown, configured to produce electricity from an electrochemical reaction between hydrogen and oxygen.

The fuel cell 23 comprises a cooling circuit 24 configured to guide the flowing of a cooling fluid to cool the fuel cell 23.

The fuel cell 23 comprises sensors, not shown, configured to measure electrical quantity such as electrical potential of each electrochemical cell of the fuel cell 23.

The fuel cell 23 is secured to the support 19 in the mounted configuration and in the extracted configuration. More precisely the fuel cell 23 is put on the bottom face 29.

The compressor 21 comprises an air inlet, not shown, and an air outlet, not shown. The compressor 21 is configured to suck in the air through the air inlet and blow out the air through the air outlet.

The compressor 21 is secured to the support 19 in the mounted configuration and in the extracted configuration.

In the mounted configuration and in the extracted configuration, the compressor 21 is fluidly connected to the fuel cell 23 in order to ensure the flowing of air in the fuel cell 23 needed to the electrochemical reaction. In other words, in the mounted configuration, the compressor 21 sucks in the exterior air through the exterior air inlet 14 and supplies said exterior air to the fuel cell 23 for the electrochemical reaction.

Advantageously, the compressor 21 is positioned above the fuel cell 23. More precisely, the compressor 21 is above the fuel cell 23 in the height direction H when the power unit 17 is in the mounted configuration.

Advantageously, the power unit 17 comprises a damper 39 placed between the compressor 21 and the fuel cell 23, in the both configuration of the power unit 17. The damper 39 is configured to absorb the vibrations generated by the functioning of the compressor 21 and to protect the fuel cell 23 from the vibrations of the compressor 21.

Advantageously, the power unit 17 comprises a filter 41. The filter 41 filters air, so that the fluid leaving the filter 41 has high proportion of oxygen. The filter 41 is positioned on the fuel cell 23 and the filter 41 is secured to the support in both configuration of the power unit 17.

In the mounted configuration, the filter 41 is configured to filter the exterior air sucked in by the compressor 21 through the exterior air inlet 14 to supply the fuel cell 23 with a fluid with a high proportion of oxygen to improve the electrochemical reaction.

Advantageously, the power unit 17 comprises a removable cover 43, not shown. The removable cover 43 has an opened configuration in which, the cover 43 is removable from the support 19 allowing an access to the volume 31 and a closed configuration in which, the cover 43 is in touch with the side walls 25, the back wall 27 and the bottom wall 29 and closes the volume 31 covering the compressor 21, the fuel cell 23, the damper 39 and the filter 41.

Advantageously, the power unit 17 comprises, in both configuration of the power unit 17, a second high voltage interface 45. The second high voltage interface 45 is a flexible bar made in an electrical conductor. The second high voltage interface 45 is electrically connected to fuel cell 23.

The second high voltage interface 45 is positioned under the fuel cell 23 between the fuel cell 23 and the bottom wall 29. The second high voltage interface 45 extends to the back wall 27 and goes through the back wall 27 to extend outside the volume 31.

In the mounted configuration, the second high voltage interface 45 is connected to the first high voltage interface 18 so that the fuel cell 23 powers the traction motor 9 via the first high voltage interface 18 connected to the second high voltage interface 45.

In the extracted configuration, the second high voltage interface 45 is disconnected from the first high voltage interface 18.

Advantageously, the power unit 17 comprises, in both configuration of the power unit 17, a second fluidic connector 47. The second fluidic connector 47 is fluidly connected to the cooling circuit 24.

In the mounted configuration, the second fluidic connector 47 is connected to the first fluidic connector 16 so that the cooling circuit 24 exchanges cooling fluid with the cooling system 15 via the first fluidic connector 16 connected to the second fluidic connector 47.

In the extracted configuration, the second fluidic connector 47 is disconnected from the first fluidic connector 16.

Advantageously, the power unit 17 comprises, in both configuration of the power unit 17, a fourth fluidic connector 49. The fourth fluidic connector 49 is fluidly connected to the fuel cell 23.

In the mounted configuration, the fourth fluidic connector 49 is connected to the third fluidic connector 20 so that the hydrogen tank 10 provides hydrogen to the fuel cell 23 via the third fluidic connector 20 connected to the fourth fluidic connector 49.

In the extracted configuration, the fourth fluidic connector 49 is disconnected from the third fluidic connector 20.

The power unit 17 comprises, in both configuration of the power unit 17, a second low-voltage interface 51. The second low voltage interface 51 is electrically connected to compressor 21.

In the mounted configuration, the second low voltage interface 51 is connected to the first low voltage interface 22 so that the low voltage source 8 powers the compressor 21 via the first low voltage interface 22 connected to the second low voltage interface 51.

In the extracted configuration, the second low voltage interface 51 is disconnected from the first low voltage interface 22.

Thus in the mounted configuration, the power unit 17 is received and secured into the housing 13, the fuel cell 23 being fluidly connected to the hydrogen tank 10, fluidly connected to the compressor 21 and electrically connected to the traction motor 9, so that the fuel cell 23 electrically powers the traction motor 9 by electrochemical reaction between the exterior air, supplied by the compressor 21 and the filter 41 through the exterior air inlet 14 and the hydrogen, provided by the hydrogen tank 10. In the extracted configuration, the power unit 17 is separated from the housing 13 with the compressor 21, the fuel cell 23 and the filter 41 still secured to the support 19, the compressor 21 still fluidly connected to the fuel cell 23 and the fuel cell 23 fluidly separated from the hydrogen tank 10 and electrically separated from the traction motor 9.

The vehicle 1 comprises a control unit 53. The control unit 53 is positioned in the interior volume 12. The control unit 53 is configured to control the power unit 17 in order to power the traction motor 9.

The control unit 53 is able to analyze the electrical quantities measured by the sensors of the fuel cell 23 to detect a deterioration of the fuel cell 23 and a need to change the power unit 17.

The positioning of the power unit 17, the control unit 53, the low voltage source 8 and the cooling system 15 in the roof box 11 allows a space saving in the vehicle 1. Moreover, the use of the roof box 11 does not limit the height of the components.

The roof box 11 wards off the power unit from the rail track 3 and protects the power unit 17 from exterior deterioration. Besides, the positioning of the power unit 17 in the roof box facilitates the transition between the mounted and the extracted configuration, for example by means of a bridge crane in workshops.

Moreover, the conception of the power unit 17 comprising the second high voltage interface 45, the second fluidic connector 47, the fourth fluidic connector 49 and the second low voltage interface 51, facilitates the connection and the disconnection of the power unit 17 to the various components of the vehicle 1 with which the power unit 17 interacts.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A railway vehicle (1), comprising:
- a traction motor (9), configured to propel the railway vehicle (1) when the traction motor (9) is electrically powered,
- a hydrogen tank (10),
- a housing (13),
- a replaceable power unit (17), separate from the traction motor (9) and the hydrogen tank (10), the replaceable power unit (17) comprising a support (19), a compressor (21) and a fuel cell (23) both secured to the support (19), the replaceable power unit (17) having:
- a mounted configuration, in which the replaceable power unit (17) is received and secured into the housing (13), the fuel cell (23) being fluidly connected to the hydrogen tank (10), fluidly connected to the compressor (21) and electrically connected to the traction motor (9), so that the fuel cell (23) electrically powers the traction motor (9) by electrochemical reaction between an exterior air, supplied by the compressor (21), and the hydrogen, provided by the hydrogen tank (10); and
- an extracted configuration, in which the replaceable power unit (17) is separated from the housing (13) with the compressor (21) and the fuel cell (23) still secured to the support (19), the compressor (21) still fluidly connected to the fuel cell (23) and the fuel cell (23) fluidly separated from the hydrogen tank (10) and electrically separated from the traction motor (9);
**characterized in that** the railway vehicle (1) comprises a roof box (11) forming the housing (13).

2. The railway vehicle (1) according to the previous claim, wherein, in the mounted configuration of the replaceable power unit (17), the compressor (21) is positioned above the fuel cell (23) in a height direction (H) of the railway vehicle (1).

3. The railway vehicle (1) according to the previous claim, wherein the replaceable power unit (17), comprises a damper (39) placed between the compressor (21) and the fuel cell (23).

4. The railway vehicle (1) according to any one of the previous claims comprising an exterior air inlet (14) which is positioned laterally on the railway vehicle (1) and opens on an exterior of the railway vehicle (1), the compressor (21) being configured to suck in the exterior air via the exterior air inlet (14) before supplying said exterior air to the fuel cell (23) for the electrochemical reaction.

5. The railway vehicle (1) according to any one of the previous claims, wherein the replaceable power unit (17) comprises a filter (41) which is secured to the support (19) in the mounted configuration and in the extracted configuration of the replaceable power unit (17), the compressor (21) being configured to suck in the exterior air via the filter (41) before supplying said exterior air to the fuel cell (23) for the electrochemical reaction.

6. The railway vehicle (1) according to any one of the previous claims, wherein the support (19) comprises a mechanical interface (33) through which the replaceable power unit (17) is secured to the housing (13) in mounted configuration.

7. The railway vehicle (1) according to any one of the previous claims, wherein:
- the railway vehicle (1) comprises a first high voltage interface (18) positioned in the housing (13), and
- the replaceable power unit (17) comprises a second high voltage interface (45), which is connected to the fuel cell (23) in the mounted configuration and in the extracted configuration of the replaceable power unit (17), the second high voltage interface (45) being disconnected from the first high voltage interface (18) in the extracted configuration and being connected to the first high voltage interface (18) in the mounted configuration so that the fuel cell (23) electrically powers the traction motor (9) via the first high voltage interface (18) connected to the second high voltage interface (45).

8. The railway vehicle (1) according to any one of the previous claims, wherein:
- the railway vehicle (1) comprises a first fluidic connector (16) positioned in the housing (13),
- the fuel cell (23) comprises a cooling circuit (24), configured to guide the flowing of a cooling fluid to cool the fuel cell (23), and
- the replaceable power unit (17) comprises a second fluidic connector (47) which is:
- connected to the cooling circuit (24) in the mounted configuration and in the extracted configuration,
- connected to the first fluidic connector (16) in the mounted configuration to enable an exchange of cooling fluid between the first fluidic connector (16) and the cooling circuit (24) via the second fluidic connector (47), and
- disconnected from the first fluidic connector (16) in extracted configuration.

9. The railway vehicle (1) according to any one of the previous claims, wherein:
- the hydrogen tank (10) comprises a third fluidic connector (20) positioned in the housing (13),
- the replaceable power unit (17) comprises a fourth fluidic connector (49), which is:
- connected to the fuel cell (23) in the mounted configuration and in the extracted configuration,
- connected to the third fluidic connector (20) in the mounted configuration to connect the fuel cell (23) with the hydrogen tank (10), and
- disconnected from the third fluidic connector (20) in extracted configuration.
